(19) **Europäisches Patentamt**

**European Patent Office**

**Office européen des brevets**

(11) **EP 1 579 127 B1**

(12) **EUROPEAN PATENT SPECIFICATION**

(45) Date of publication and mention
of the grant of the patent:
**13.09.2006 Bulletin 2006/37**

(51) Int Cl.:
*F16H 61/662* *(2006.01)*     *B60W 30/18* *(2006.01)*
*B60W 10/06* *(2006.01)*     *B60W 10/10* *(2006.01)*

(21) Application number: **03808286.3**

(22) Date of filing: **19.12.2003**

(86) International application number:
**PCT/EP2003/014804**

(87) International publication number:
**WO 2004/057217 (08.07.2004 Gazette 2004/28)**

(54) **METHOD FOR OPERATING A CONTINUOUSLY VARIABLE TRANSMISSION**

VERFAHREN ZUR BETÄTIGUNG EINES STUFENLOSEN GETRIEBES

PROCEDE DE FONCTIONNEMENT D'UNE TRANSMISSION CONTINUELLEMENT VARIABLE

(84) Designated Contracting States:
**AT BE BG CH CY CZ DE DK EE ES FI FR GB GR
HU IE IT LI LU MC NL PT RO SE SI SK TR**

(30) Priority: **23.12.2002 NL 1022243**

(43) Date of publication of application:
**28.09.2005 Bulletin 2005/39**

(60) Divisional application:
**06076135.0 / 1 698 805**

(73) Proprietor: **Van Doorne's Transmissie B.V.
5000 AM Tilburg (NL)**

(72) Inventors:
- **VAN DER LAAN, Maaike
NL-5018 EA Tilburg (NL)**
- **VAN DROGEN, Mark
NL-5021 EJ Tilburg (NL)**

(56) References cited:
**EP-A- 1 314 913**     **DE-A- 10 050 218**
**US-A- 6 050 912**     **US-A1- 2001 049 315**
**US-B1- 6 436 004**

EP 1 579 127 B1

**Description**

The present invention relates to a method for operating a continuously variable transmission as described in the preamble of Claim 1. DE-A-100 50 218 discloses a method having these precharacterizing features.

A transmission of this type is generally known, for example from EP-A 1 167 839 in the name of the present Applicant. In this type of transmissions, which are based on friction and clamping force, a minimum force is required by which the discs clamp the drive belt in order to enable the latter to transmit a rotation from one pulley to the other. In this context, a minimum axial clamping force Fax-min required, which is applied to the drive belt by one pulley and is necessary in order for a torque which is supplied to be passed on at least virtually without slip between the belt and the pulley, is in practice often calculated from the torque T supplied times the cosine of half an angle $\phi$ defined between the tapering pulley discs divided by the product of twice a running radius R of the drive belt between the discs of a pulley and an empirically defined torque transmission coefficient $\tau$:

$$\text{Fax-min} = (T \cdot \cos(\tfrac{1}{2}\phi)) / (2 \cdot R \cdot \tau) \qquad (1)$$

In this equation, in practice the coefficient of friction $\mu$ in the contact between drive belt and pulley is often substituted for the torque transmission coefficient $\tau$. Equation (1) can be considered a good approximation.

The value for the minimum clamping force Fax-min required which has been determined in this way in principle applies to both pulleys, but to maintain a constant transmission ratio it may be necessary for the clamping force on one of the two pulleys to be selected to be higher still. Also, to enable the transmission to shift, different clamping forces may be required, or at least a different ratio between the clamping forces of the respective pulleys. However, the abovementioned minimum clamping force Fax-min required always applies to at least one of the two pulleys, with a higher clamping force on the drive belt then being applied at the other pulley in order to achieve the desired transmission ratio or a desired speed of a change therein.

The clamping force Fax which is to be applied is in turn generally defined as the minimum axial clamping force Fax-min required times a safety factor Sf:

$$\text{Fax} = \text{Sf} \cdot \text{Fax-min} \qquad (2)$$

The safety factor Sf takes account, for example, of any inaccuracy in the calculation of the minimum clamping force Fax-min required.

An operating method of this type is in general use and is known, for example, from Patent Publication EP-A 1 218 654, in the name of the present Applicant. The general aim in this context is for the clamping force applied to the drive belt to be as low as possible in relation to the torque supplied, i.e. to use a safety factor which is as low as possible. The reason for this is that the lower the clamping force, the better the efficiency of the transmission. For example, the friction losses will be lower and the power taken up to generate the clamping forces is lower. Also, a lower clamping force is also better for the service life of the belt. However, in the case of clamping forces which are only just above the minimum force required, i.e. just above the clamping force at which slip may occur between pulley and drive, there is a relatively high risk of drive belt slip, for example on account of an unexpected change in torque taken up by the load or the abovementioned inaccuracy in the calculation of the minimum clamping force Fax-min required. According to the prior art, however, drive belt slip must in principle be avoided in order to ensure the robustness and optimum efficiency of the transmission, since drive slip by definition leads to a loss of power and moreover may result in excessive wear.

Therefore, in the known transmission, a value of 1.3 or above is typically used for the safety factor. Alternatively, there are additional known measures which can be used to avoid the occurrence of drive belt slip even with a relatively low safety factor. For example, it is known from European Patent EP-A 1 069 331 to actuate a clutch in a drive line in which the transmission is incorporated in such a manner that it slips at a lower torque level than the drive belt. This is because once the clutch slips, the torque supplied cannot rise or can scarcely rise further, and any excess power is dissipated by the clutch. Another alternative solution is given by the prior art document mentioned first, in which the clamping force is selectively reduced, i.e. the safety factor is selectively reduced as a function of circumstances. Such lowering in this case takes place on the basis that changes in torque which is to be transmitted, whether they are initiated by the internal combustion engine or by circumstances at the load, in relative terms become lower as torque levels increase.

Therefore, it is an object of the present invention to provide a method for operating the continuously variable transmission which allows the efficiency or robustness of the transmission to be improved, in particular by using a relatively low safety factor, which method can advantageously be used independently of the known additional measures.

According to a new insight, on which the invention is based, a drive belt can be repeatedly, and under certain circumstances even continuously, subjected to a relatively considerable degree of slip without suffering fatal damage, i.e. without the normal operation of the transmission being adversely affected. This contrasts with previous technical insights, according to which complete slippage of the belt with respect to the pulleys should in principle be limited as much as possible or even avoided altogether.

According to the invention, it is in this case advantageously possible to use a slip characteristic in which it is determined, for the transmission ratios of the transmission and as a function of the axial clamping force and the respective tangential slip rate between the pulley and the drive belt, whether damage, whether fatal or otherwise, to the belt or pulley occurs under these defined conditions, with what is known as a damage line indicating the transition or boundary between these states. A slip characteristic of this type shows that the transmission is under all circumstances to some degree resistant to the abovementioned drive belt slip, and that in particular it is even possible to permit a considerable slip rate at a relatively low clamping force or a relatively high transmission ratio (which is defined as the ratio between the output rotational speed and the input rotational speed of the transmission).

On the basis of this slip characteristic and the new insight derived therefrom, the invention proposes an alternative means of controlling the clamping force, which advantageously makes use of the abovementioned slip between the drive belt and a pulley. The method according to the invention is given in Claim 1 and is characterized in that the transmission is provided with an electronic operating unit which detects the degree of movement between the pulley discs of the pulleys and the drive belt, in this case denoted as drive belt slip S, with the aid of slip-detection means, and in that the operating unit uses an operating measure to actively control the detected drive belt slip S to a desired value Sw for this slip.

According to the invention, the degree of drive belt slip S can to this end, by way of example, be quantified as the difference between a geometrically defined transmission ratio GR and a measured transmission ratio $\omega_{OUT}/\omega_{IN}$, i.e. the quotient of the rotational speeds $\omega_{OUT}$, $\omega_{IN}$ of the two pulleys and can be defined, for example, as:

$$S = (1 - ((\omega_{OUT}/\omega_{IN}) / GR)) \bullet 100\% \qquad (3)$$

After all, some slip always occurs in the frictional contact between drive belt and pulley, i.e. even in the known method for operation of the transmission, in which the axial clamping force Fax which is required to be applied to the drive belt by a pulley is defined by the operating unit as a function and on the basis of the torque T supplied, for example by the combination of Equations (1) and (2). In the known method, however, drive belt slip S is avoided as far as possible by selecting a sufficiently high safety factor.

According to the present invention, the operating measure, such as for example suitable regulation of the axial clamping force, by contrast, is determined by the operating unit as a function and on the basis of a difference between the actual drive belt slip S and a desired value Sw for this slip. Although some power will be lost, in the form of frictional heat between the drive belt and a pulley, as a result of the drive belt slip S, no safety factor Sf is used in the operating method according to the invention, so that the final efficiency of the transmission is higher. Obviously, it is in this case preferred for the desired value for the drive belt slip Sw to be selected to be as low as possible, in order to minimize the abovementioned loss of power. At the same time, this desired value Sw has to be selected to be sufficiently high to allow the actual drive belt slip S to be detected and regulated on the basis of this value.

The slip-detection means for determining the drive belt slip, for example by detecting the abovementioned geometric transmission ratio and rotational speeds, are generally known in the prior art. In particular, the slip-detection means according to the invention comprise means for determining the geometrically defined transmission ratio GR. Various detection means which are suitable for this purpose are known from the prior art, such as for example a drive belt speed-measuring device for determining the circumferential velocity of the drive belt, from which the running radius of the drive belt can be calculated, a pulley disc position sensor for determining the distance between the discs of a pulley, from which once again the running radius of the drive belt can be calculated, or a drive belt position sensor for directly determining the running radius of the drive belt.

In an advantageous and simple embodiment of the invention, the slip-detection means are only effective while the transmission ratio of the transmission is at its highest value, i.e. the overdrive ratio, and/or its lowest value, i.e. the low ratio. This is because it is customary for at least one of the axially displaceable discs of the pulleys to be positioned against a stop in these transmission ratios, so that the geometrically defined transmission ratio GR of the transmission and therefore also the running radius R from Equation (3) has a fixed and known value. Outside these transmission ratios, the operating unit can then control the transmission in a second operating mode corresponding to a known method which is not based on drive belt slip. This inherently limited embodiment may in fact be desirable, since, when the transmission is used in a motor vehicle, the vehicle will in practice be operated predominantly in overdrive, so that in particular the transmission efficiency in overdrive will be a determining factor.

According to the invention, the operating measure consists at least in part in increasing the clamping force Fax if the detected drive belt slip S exceeds the desired value Sw and reducing this force if the detected drive belt slip S is lower than the desired value Sw for this slip. According to the invention, it is also possible for the operating measure at least in part to consist in reducing it if the detected drive belt slip S exceeds the desired value Sw and increasing it if the detected drive belt slip S is lower than the desired value Sw for this slip. Finally, according to the invention, the operating measure can at least in part consist in increasing the running radius R if the detected drive belt slip S exceeds the desired value Sw, and vice versa.

It should be noted that the novel insight on which the invention is based involves not only optimizing the efficiency and/or increasing the robustness of the transmission, but also aims to save on the cost price, for example on account of the fact that the absence of the abovementioned safety factor Sf in the relationship between the torque T supplied and the axial clamping force Fax means that the maximum level required for this relationship can be set significantly lower.

The invention will now be explained in more detail, by way of example, on the basis of a drawing, in which:

Figure 1 diagrammatically depicts part of a continuously variable transmission with drive belt and pulleys;
Figure 2 shows an illustration of the insight in accordance with the invention in the form of what is known as a slip characteristic determined for the present transmission; and
Figure 3 shows an example of what is known as a traction curve for the present transmission.

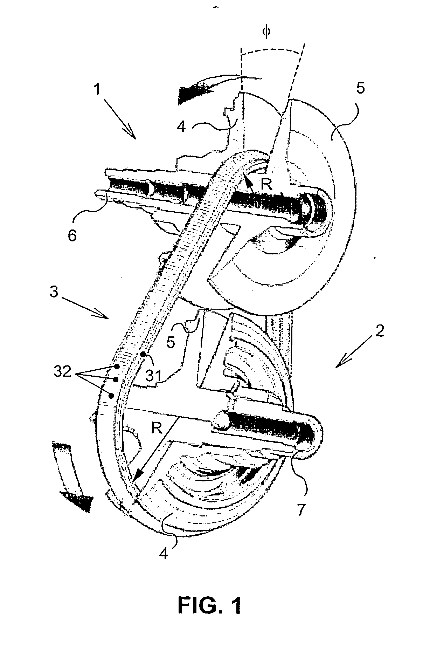

Figure 1 shows the central parts of a continuously variable transmission as is used in the drive of, for example, passenger cars. The transmission per se is generally known and comprises a first and second pulley 1 and 2, each comprising two pulley discs 4, 5, between which there is a drive belt 3. The pulley discs 4, 5 are shaped conically, and at least one disc 4 of a pulley 1, 2 can be displaced in the axial direction along a respective axle 6, 7 on which the discs 4, 5 are mounted. The transmission also includes activation means, which are not shown in the figure and can generally be controlled electronically and act hydraulically so that they can apply an axial force Fax to the abovementioned one disc 4, in such a manner that the drive belt 3 is clamped between the respective discs 4, 5 and the driving force of an axle 6, 7, i.e. a torque T supplied, is transmitted between the pulleys 1, 2 by means of friction in the conical contact surface between the discs 4, 5 and the drive belt 3. In accordance with Equation (1), the axial clamping force Fax-min required for this purpose is determined using the torque T supplied, a contact angle of the said contact surface with the radial direction, i.e. half an angle $\phi$ defined between the tapering pulley discs, a running radius R of the drive belt 3 and a torque transmission coefficient $\tau$.

However, the value for the minimum axial clamping force Fax-min required, which has been determined with the aid of Equation (1) is to a certain extent inaccurate on account of possible deviations between the value for the torque T supplied and for the running radius R, which has been recorded for the clamping force determination, and the actual value of these parameters. Moreover, in practice there is often also an unknown difference between the desired value for the axial clamping force Fax to be applied by the activation means and the clamping force which is actually present. The abovementioned inaccuracies and uncertainties mean that the desired value for the axial clamping force Fax is selected to be slightly higher than the minimum clamping force Fax-min required, in particular by multiplying the latter by a safety factor Sf in accordance with Equation (2).

The drive belt 3 shown in Figure 1 comprises a few endless metal support elements 31, each comprising a set of nested thin metal rings which form a carrier for a series of metal transverse elements 32 which absorb the clamping forces exerted between the discs 4, 5 of a pulley 1, 2 and which are moved over the carrier elements 31, pushing one another, towards a driven pulley 2 as a result of a rotation of a driving pulley 1. A drive belt of this type is also known as the Van Doorne pushbelt and is described in more detail in, for example, European Patent EP-A 0 626 526.

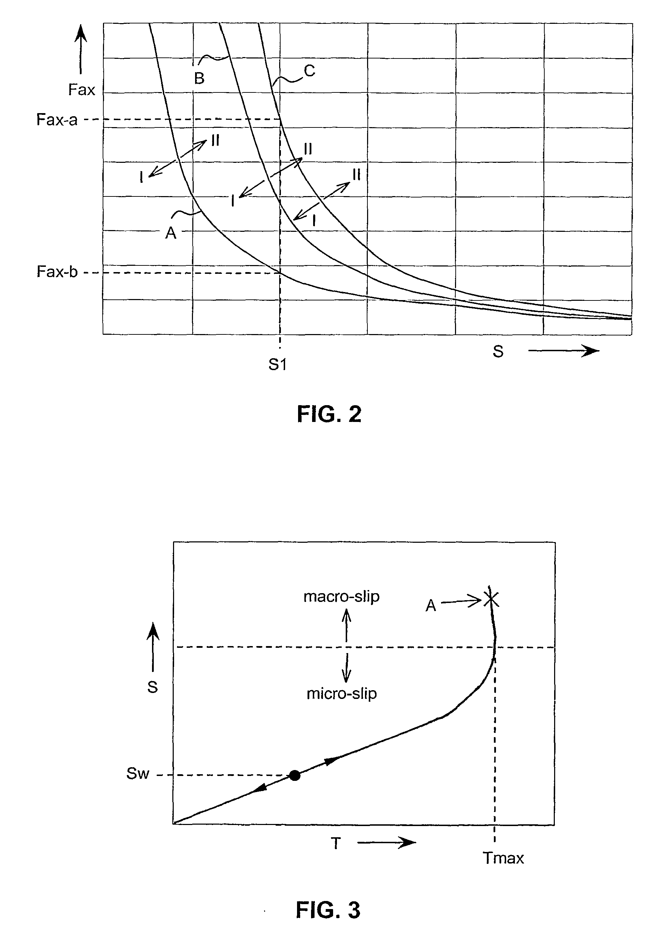

According to the insight on which the present invention is based, this type of drive belt 3 is at least to some extent able to withstand slippage between the pulley 1, 2 and the belt 3, i.e. drive belt slip S. In this context, what is known as a slip characteristic can be used as a starting point for the efforts to optimize robustness and efficiency of the continuously variable transmission, on which the invention is based. Figure 2 shows an example of a slip characteristic of this type, in which it is defined, for the geometric transmission ratios of the transmission and as a function of the axial clamping force Fax and the absolute degree of drive belt slip S, whether damage, whether fatal or otherwise, to the drive belt 3 or the pulley 1, 2 occurs under these defined conditions. The curves or damage lines A, B and C in Figure 2 in this case indicate, for a defined geometric transmission ratio, the maximum permissible value for the drive belt slip S, beneath which, indicated by arrows I, this fatal damage does not occur and above which, indicated by arrows II, this fatal damage does occur. According to an idea on which the invention is based, adhesive wear occurs as a result of slip when, for a defined combination of a force Fax applied to the drive belt by a pulley disc and a slip speed between these two components, i.e. the degree of drive belt slip S, a maximum value therefor is exceeded.

However, it can be seen from the slip characteristic that the transmission is at least to some extent able to withstand the drive belt slip S. Figure 2 also shows that the maximum degree A of drive belt slip S is reached more quickly in the low ratio than this maximum value C in the overdrive ratio, i.e. for the same degree of drive belt slip S1, damage occurs to the drive belt or pulley at a lower level of the axial clamping force Fax-a in the low ratio compared, for example, to the critical level of the clamping force Fax-b in the overdrive ratio, or in other words for a constant level of the axial clamping force Fax, a lower level of drive belt slip S can be deemed acceptable in the low ratio compared to the overdrive ratio. The damage line B relates to a transmission ratio between the low ratio and the overdrive ratio.

For clarity, Figure 3 illustrates the invention once again on the basis of what is known as a traction curve. This figure plots the drive belt slip S as a function of the torque T supplied for a given transmission ratio, in this case the overdrive ratio, and a given axial clamping force Fax. It can be seen from Figure 3 that there is fundamentally always some drive belt slip S. The torque level T can in this case increase to a maximum torque level Tmax, at which the associated drive belt slip S is defined in accordance with the invention as micro-slip. Although the drive belt slip S does increase further beyond the maximum torque level Tmax, the torque T which is transmitted remains virtually constant or even decreases slightly. According to the invention, this type of drive belt slip S is defined as macro-slip. When a combination of a certain critical value for the drive belt slip in combination with a certain torque level, in the figure indicated by point A on the traction curve, is passed, damage will occur to the drive belt 1. The desired value Sw from the method according to the invention must of course be lower than the said critical value, at least in combination with the associated torque level. To minimize the abovementioned torque loss, the desired value Sw is preferably selected to lie in the micro-slip range.

As can be seen from Figure 2, the ability of the transmission to withstand the drive belt slip S is still dependent on conditions. Therefore, in a more detailed embodiment of the method, it is proposed to determine the abovementioned desired value Sw as a function of a maximum permissible degree of the drive belt slip S at the instantaneous transmission ratio of the transmission and the axial clamping force Fax, meaning that a lower desired value Sw is selected under conditions in which the transmission is relatively unable to withstand the drive belt slip S, and vice versa.

Under certain circumstances, for example those in which the transmission has very little ability to withstand the drive belt slip S, such as in the low ratio with a high clamping force and/or torque level T, it may be advantageous or even necessary for the operating means no longer to control the transmission in accordance with the abovementioned first operating mode, but rather to select a second operating mode, in which they regulate the axial clamping force Fax as a direct function of the torque T supplied. In this case, it is possible to switch between the operating modes as a function of the value and/or level of an operating parameter. In this context, suitable operating parameters include the maximum permissible degree of the drive belt slip S under specific circumstances, the level of the torque T supplied or the transmission ratio of the transmission, the critical value of which for switching between the operating modes can be derived, for example, from the slip characteristic.

In addition, according to the invention a torque transmission coefficient $\tau$ is determined from the equation:

$$\tau = (T \cdot \cos(\tfrac{1}{2}\phi)) / (2 \cdot R \cdot Fax), \tag{4}$$

in which case an excessively high or excessively low value may indicate a large number of possible problems in the transmission. Furthermore, a temperature of the drive belt (3), which is representative of the abovementioned power loss, may also be a suitable operating parameter, in which case an excessively high temperature indicates an unacceptable level of the drive belt slip S in any operating method.

In addition to what has been described above, the invention also relates to all details in the figures, at least where they can be directly and unambiguously understood by a person skilled in the art, and to the features described in the set of claims which follows.

**Claims**

1. Method for operating a continuously variable transmission provided with two pulleys (1, 2), each provided with two pulley discs (4, 5) which together define a tapering groove and between which a drive belt (3) is clamped at a radial position, i.e. running radius R, with the aid of an axial clamping force Fax for transmitting a torque T supplied to the transmission, during normal operation of the transmission, between the said pulleys (1, 2) from one pulley (1) to the other pulley (2) with the aid of friction between the discs (4, 5) and the drive belt (3), which transmission is operated by an electronic operating unit, wherein, when the transmission is operating in a first operating mode of the operating unit, the latter detects the degree of movement between the pulley discs (4, 5) and the drive belt (3), i.e. drive belt slip S, with the aid of slip-detection means and wherein the operating unit uses an operating measure to actively control the detected drive belt slip S to a desired value Sw for this slip, **characterised in that** the said desired value Sw is determined by the electronic operating unit as a function of a maximum permissible level of the drive belt slip S at the instantaneous axial clamping force Fax and an transmission ratio defined as the ratio between an ouput rotational speed and an input rotational speed of the transmission, which maximum permissible level increases as the clamping force Fax decreases, or as the transmission ratio increases and vice versa.

2. Method according to Claim 1, **characterized in that** the axial clamping force Fax is controlled by the electronic operating unit, and **in that** the operating measure at least in part consists in increasing this force if the detected drive belt slip S exceeds the desired value Sw and reducing this force if the detected drive belt slip S is lower than the desired value Sw for this slip.

3. Method according to Claim 1 or 2, **characterized in that** the torque T which is supplied is controlled at least in part by the electronic operating unit, and **in that** the operating measure at least in part consists in reducing this torque if the detected drive belt slip S exceeds the desired value Sw and increasing this torque if the detected drive belt slip S is lower than the desired value Sw for this slip.

4. Method according to Claim 1, 2 or 3, **characterized in that** the running radius R is controlled by the electronic control unit, and **in that** the operating measure at least in part consists in increasing this radius if the detected drive belt slip S exceeds the desired value Sw and reducing this radius if the detected drive belt slip S is lower than the desired value Sw for this slip.

5. Method according to one of the preceding claims, **characterized in that** the operating unit is pre-programmed with a characteristic diagram, in which, for at least a number of transmission ratios of the transmission, the axial clamping force Fax is related to a maximum permissible level of the drive belt slip S, these relationships being known as the damage lines (A, B, C).

6. Method according to one of the preceding claims, **characterized in that**, when the transmission is operating, the operating unit, in a second operating mode, controls the axial clamping force Fax as a direct function of the torque T supplied, and **in that** the operating unit can switch between the two operating modes as a function of the value and/or level of an operating parameter.

7. Method according to Claim 6, **characterized in that** the operating parameter is representative of a maximum permissible level for the drive belt slip S, preferably as given by a slip characteristic in which, for at least a number of the transmission ratios of the transmission, the axial clamping force Fax is related to a maximum permissible level of the drive belt slip S, these curves being known as the damage lines (A, B, C), and **in that**, if the operating parameter drops below a defined limit value, the operating unit switches from the first operating mode to the second operating mode.

8. Method according to Claim 6, **characterized in that** the operating parameter is representative of a torque transmission coefficient $\tau$ determined from:

$$\tau = (T \cdot \cos(\tfrac{1}{2}\phi)) / (2 \cdot R \cdot Fax),$$

where $\phi$ is an angle defined between the tapering pulley discs (4, 5), and **in that**, if the operating parameter drops below or exceeds a defined limit value, the operating unit is switched from the first operating mode to the second operating mode.

9. Method according to Claim 6, **characterized in that** the operating parameter is representative of at least one out of the torque T supplied, a temperature of the drive belt (3) and the transmission ratio of the transmission, and **in that**, if the operating parameter drops below or exceeds a defined limit value, the operating unit is switched from the first operating mode to the second operating mode.

10. Method according to one of the preceding claims, **characterized in that** the slip-detection means determine the degree of drive belt slip S as the difference or ratio between a geometrically defined transmission ratio GR of the transmission and a ratio $\omega_{OUT}/\omega_{IN}$ between the rotational speeds of the respective pulleys (1, 2), and **in that** the slip-detection means are pre-programmed with one or both most extreme geometrically defined transmission ratios GR of the transmission, namely the lowest transmission ratio, i.e. low ratio, and/or the highest transmission ratio, i.e. overdrive ratio, in such a manner that, at least when the transmission has adopted one of the two extreme transmission ratios GR, the degree of drive belt slip S can be determined by the slip-detection means.

11. Continuously variable transmission which is operated in accordance with one or more of the above methods.

**Patentansprüche**

1. Verfahren zum Betrieb eines kontinuierlich veränderbaren Getriebes mit zwei Rollen (1, 2), die jeweils zwei Rollenscheiben (4, 5) aufweisen, die zusammen eine sich verjüngende Nut definieren und zwischen denen ein Treibreimen (3) in einer radialen Position eingespannt ist, d.h. Laufradius R, um mithilfe einer axialen Spankraft Fax ein dem Getriebe zugeführtes Drehmoment T zu übertragen, während des normalen Betriebs des Getriebes, zwischen den Rollen (1, 2) von einer Rolle (1) zur anderen Rolle (2), mithilfe von Reibung zwischen den Scheiben (4, 5) und dem Treibriemen (3); wobei das Getriebe von einer elektronischen Betriebseinheit betrieben wird, wobei, wenn das Getriebe in einer ersten Betriebsart der Betriebseinheit arbeitet, letztere den Verschiebungsgrad zwischen den Rollenscheiben (4, 5) und dem Treibriemen (3), d.h. den Treibriemenschlupf S, mithilfe von Mitteln zur Schlupferfassung erkennt, und wobei die Betriebseinheit eine Betriebsmaßnahme verwendet, um den ermittelten Treibriemenschlupf S auf einen gewünschten Wert Sw für diesen Schlupf zu regeln, **dadurch gekennzeichnet, dass** der gewünschte Wert Sw von der elektronischen Betriebseinheit festgelegt wird als eine Funktion eines maximalen zulässigen Niveaus des Treibriemenschlupfes S bei momentaner axialer Spannkraft Fax und einem Übersetzungsverhältnis, das als das Verhältnis zwischen einer Antriebsdrehzahl des Getriebes definiert ist, wobei das maximale zulässige Niveau zunimmt, wenn die Spannkraft Fax abnimmt oder wenn das Übersetzungsverhältnis zunimmt und umgekehrt.

2. Verfahren nach Anspruch 1, **dadurch gekennzeichnet, dass** die axiale Spannkraft Fax durch die elektronische Betriebseinheit gesteuert wird, und dass die Betriebsmaßnahme zumindest teilweise darin besteht, diese Kraft zu erhöhen, wenn der ermittelte Treibriemenschlupf S den gewünschten Sw übersteigt, und diese Kraft zu verringern, wenn der ermittelte Treibriemenschlupf S niedriger ist als der für diesen Schlupf gewünschte Wert Sw.

3. Verfahren nach Anspruch 1 oder 2, **dadurch gekennzeichnet, dass** das übertragene Drehmoment T zumindest teilweise durch die elektronische Betriebseinheit gesteuert wird, und dass die Betriebsmaßnahme zumindest teilweise darin besteht, dieses Drehmoment T zu verringern, wenn der ermittelte Treibriemenschlupf S den gewünschten Wert Sw übersteigt, und dieses Drehmoment zu erhöhen, wenn der ermittelte Treibriemenschlupf S niedriger ist als der für diesen Schlupf gewünschte Wert Sw.

4. Verfahren nach Anspruch 1, 2 oder 3, **dadurch gekennzeichnet, dass** der Laufradius R von der elektronische Steuerungseinheit geregelt wird, und dass die Betriebsmaßnahme zumindest teilweise darin besteht, diesen Radius zu erhöhen, wenn der ermittelte Treibriemenschlupf S den gewünschten Wert Sw übersteigt, und diesen Radius zu verringern, wenn der ermittelte Treibriemenschlupf S niedriger ist als der für diesen Schlupf gewünschte Wert Sw.

5. Verfahren nach einem der vorhergehenden Ansprüche, **dadurch gekennzeichnet, dass** die Betriebseinheit mit einem charakteristischen Diagram vorprogrammiert ist, in dem für wenigstens eine Anzahl von Übersetzungsverhältnissen des Getriebes die axiale Spannkraft Fax auf ein maximales zulässiges Niveau des Treibriemenschlupfes bezogen ist, wobei diese Beziehungen als Schadenslinien (A, B, C) bekannt sind.

6. Verfahren nach einem der vorhergehenden Ansprüche, **dadurch gekennzeichnet, dass**, wenn das Getriebe in Betrieb ist, die Betriebseinheit in einer zweiten Betriebsart die axiale Spannkraft als eine direkte Funktion des zugeführten Drehmoments T regelt, und dass die Betriebseinheit zwischen den beiden Betriebsarten als Funktion des Wertes und/oder Niveaus eines Betriebsparameters wechseln kann.

7. Verfahren nach Anspruch 6, **dadurch gekennzeichnet, dass** der Betriebsparameter stellvertretend ist für ein maximales zulässiges Niveau für den Treibriemenschlupf S, vorzugsweise wie durch eine Schlupfcharakteristik angegeben, bei der, zumindest für eine Anzahl von Übersetzungsverhältnissen des Getriebes, die axiale Spannkraft Fax auf ein maximales zulässiges Niveau des Treibriemenschlupfs S bezogen ist, wobei diese Kurven als Schadenslinien (A, B, C) bekannt sind, und dass, wenn der Betriebsparameter unter einen definierten Grenzwert fällt, die Betriebseinheit von der ersten Betriebsart in die zweite Betriebsart wechselt.

8. Verfahren nach Anspruch 6, **dadurch gekennzeichnet, dass** der Betriebsparameter stellvertretend ist für einen Drehmomentübertragungskoeffizienten $\tau$, der sich ergibt aus:

$$\tau = (T \bullet \cos(\tfrac{1}{2}\phi))/(2 \bullet R \bullet Fax)$$

wobei $\phi$ ein Winkel zwischen den sich verjüngenden Rollenscheiben (4, 5) ist, und dass, wenn der Betriebsparameter unter einen definierten Grenzwert fällt oder ihn übersteigt, die Betriebseinheit von der ersten Betriebsart in die zweite Betriebsart wechselt.

9. Verfahren nach Anspruch 6, **dadurch gekennzeichnet, dass** der Betriebsparameter für zumindest eines der Folgenden charakteristisch ist: das übertragene Drehmoment T, eine Temperatur des Treibriemens (3) und das Übersetzungsverhältnis des Getriebes, und dass, wenn der Betriebsparameter unter einen definierten Grenzwert fällt oder ihn übersteigt, die Betriebseinheit von der ersten Betriebsart in die zweite Betriebsart wechselt.

10. Verfahren nach einem der vorhergehenden Ansprüche, **dadurch gekennzeichnet, dass** die Schlupferfassungsmittel den Grad an Treibriemenschlupf S bestimmen als die Differenz oder das Verhältnis zwischen einem geometrisch definierten Übersetzungsverhältnis GR des Getriebes und einem Verhältnis $\omega_{OUT}/\omega_{IN}$ zwischen den Rotationsgeschwindigkeiten der jeweiligen Rollen (1, 2), und dass die Schlupferfassungsmittel vorprogrammiert sind mit einem oder beiden extremsten geometrisch definierten Übersetzungsverhältnissen GR des Getriebes, nämlich dem niedrigsten Übersetzungsverhältnis, d.h. niedriges Verhältnis, und/oder dem höchsten Übersetzungsverhältnis, d.h. Overdrive bzw. Schongang-Verhältnis, dergestalt, dass zumindest wenn das Getriebe eines der beiden extremen Übersetzungsverhältnisse GR angenommen hat, der Grad an Treibriemenschlupf S durch die Schlupferfassungsmittel bestimmt werden kann.

11. Kontinuierlich veränderbares Getriebe, das gemäß einem oder mehreren der oben genannten Verfahren betrieben wird.

**Revendications**

1. Procédé de fonctionnement d'une transmission continuellement variable dotée de deux poulies (1, 2), chacune étant équipée de deux disques de poulie (4, 5) qui définissent ensemble une rainure conique et entre lesquels une courroie d'entraînement (3) est serrée au niveau d'une position radiale, c'est-à-dire un rayon de roulement R, à l'aide d'une force de serrage axial Fax pour transmettre un couple T fourni à la transmission, pendant le fonctionnement normal de la transmission, entre les poulies (1, 2) d'une poulie (1) à l'autre poulie (2) à l'aide du frottement entre les disques (4, 5) et la courroie d'entraînement (3), transmission qui est actionnée par une unité d'actionnement électronique, dans lequel, lorsque la transmission fonctionne dans un premier mode de fonctionnement de l'unité d'actionnement, cette dernière détecte le degré de déplacement entre les disques de poulie (4, 5) et la courroie d'entraînement (3), c'est-à-dire le glissement S de la courroie d'entraînement, à l'aide de moyens de détection de glissement et l'unité d'actionnement utilise une mesure d'actionnement pour contrôler activement le glissement S détecté de la courroie d'entraînement de l'unité d'entraînement à une valeur Sw souhaitée pour ce glissement, **caractérisé en ce que** la valeur souhaitée est déterminée par l'unité d'actionnement électronique comme une fonction d'un niveau maximum autorisée du glissement S de la courroie d'entraînement à la force de serrage axiale instantanée Fax et un rapport de transmission défini comme le rapport entre une vitesse de rotation de sortie et une vitesse de rotation d'entrée de la transmission, le niveau maximum autorisé augmentant lorsque la force de serrage Fax diminue, ou lorsque le rapport de transmission augmente et vice-versa.

2. Procédé selon la revendication 1, **caractérisé en ce que** la force de serrage axiale Fax est contrôlée par l'unité d'actionnement électronique et la mesure d'actionnement consiste au moins en partie à augmenter cette force ci le glissement S détecté de la courroie d'entraînement dépasse la valeur souhaitée Sw et à réduire cette force si le glissement S détecté de la courroie d'entraînement est inférieur à la valeur souhaitée Sw pour ce glissement.

**3.** Procédé selon la revendication 1 ou 2, **caractérisé en ce que** le couple T qui est alimenté est contrôlé au moins en partie par l'unité d'actionnement consiste au moins en partie à réduire ce couple si le glissement S détecté de la courroie d'entraînement dépasse la valeur souhaitée Sw et à augmenter ce couple si le glissement S détecté de la courroie d'entraînement est inférieur a la valeur souhaitée Sw pour ce glissement.

**4.** Procédé selon la revendication 1, 2 ou3, **caractérisé en ce que** le rayon de roulement R est contrôlé par l'unité de contrôle électronique, et la mesure d'actionnement consiste au moins en partie à augmenter ce rayon si le glissement S détecté de la courroie d'entraînement dépasse la valeur souhaitée Sw et à réduire ce rayon si le glissement S détecté de la courroie d'entraînement est inférieur à la valeur souhaitée Sw pour ce glissement.

**5.** Procédé selon l'une des revendications précédentes, **caractérisé en ce que** l'unité d'actionnement est préprogrammée avec un diagramme caractéristique, dans lequel, pour au moins un certain nombre de rapports de transmission, la force de serrage axiale Fax est liée à un niveau maximum autorisé du glissement S de la courroie d'entraînement, ces relation étant connues sous le nom de lignes de dommage (A, B, C).

**6.** Procédé selon l'une des revendications précédentes, **caractérisé en ce que** lorsque la transmission fonctionne, l'unité d'actionnement, dans un second mode de fonctionnement, contrôle la force de serrage axiale Fax comme une fonction directe du couple T fourni, et l'unité d'actionnement peut commuter entre les deux modes de fonctionnement en fonction de la valeur et/ou du niveau d'un paramètre d'actionnement.

**7.** Procédé selon la revendication 6, **caractérisé en ce que** le paramètre d'actionnement est représentatif d'un niveau maximum autorisé pour le glissement S de la courroie d'entraînement, de préférence tel que donné par une caractéristique de glissement dans laquelle, pour au moins un certain nombre des rapports de la transmission, la force de serrage axiale Fax est liée à un niveau maximum autorisé du glissement S de la courroie d'entraînement, ces courbes étant connues sous le nom de lignes de dommage (A, B, C), et si le paramètre d'actionnement tombe en dessous d'une valeur limite définie, l'unité d'actionnement commute du premier mode de fonctionnement au second mode de fonctionnement.

**8.** Procédé selon la revendication 6, **caractérisé en ce que** le paramètre d'actionnement est représentatif d'un coefficient de transmission de couple τ déterminé par:

$$\tau = (T \bullet \cos(\tfrac{1}{2}\phi))/(2 \bullet R \bullet Fax)$$

où φ est un angle défini entre les disques de poulie coniques (4, 5), et si le paramètre d'actionnement tombe en dessous de ou dépasse une valeur limite définie, l'unité d'actionnement commute du premier mode de fonctionnement au second mode de fonctionnement.

**9.** Procédé selon la revendication 6, **caractérisé en ce que** le paramètre d'actionnement est représentatif d'au moins un élément parmi le couple T fourni, une température de courroie d'entraînement (3) et le rapport de la transmission, et si le paramètre d'actionnement tombe en dessous de ou dépasse une valeur limite définie, l'unité d'actionnement commute du premier mode de fonctionnement au second mode de fonctionnement.

**10.** Procédé selon l'une des revendications précédentes, **caractérisé en ce que** les moyens de détection de glissement déterminent le degré du glissement S de la courroie d'entraînement comme la différence ou le rapport entre un rapport de transmission défini géométriquement GR de la transmission et un rapport $\omega_{OUT}/\omega_{IN}$) entre les vitesses de rotation des poulies respectives (1, 2), et les moyens de détection de glissement sont préprogrammés avec l'un ou les deux rapports de transmission définis géométriquement GR les plus extrêmes de la transmission, c'est à dire le rapport de transmission le plus bas, à savoir le rapport bas, et/ou ie rapport de transmission le plus élevé, à savoir le rapport de surcharge, de telle sorte que, au moins lorsque la transmission a adopté l'un des deux rapports de transmission GR extrêmes, le degré de glissement S de la courroie d'entraînement peut être déterminé par les moyens de détection de glissement.

**11.** Transmission continuellement variable qui fonctionne selon l'un ou plusieurs des procédés ci-dessus.

**FIG. 1**

**FIG. 2**

**FIG. 3**